# EUROPEAN PATENT APPLICATION

(11) **EP 3 026 314 A1**
(43) Date of publication of application: **01.06.2016**
(21) Application number: 14195045.1
(22) Date of filing: 27.11.2014
(51) Int. Cl.: F16L 3/04

(54) **Fixing element, installation assembly, device assembly and method of fixing**

(71) Applicant: ABB Technology Oy, 00380 Helsinki (FI)
(72) Inventor: Poikolainen, Seppo, 00380 Helsinki (FI)
(74) Representative: Kolster Oy Ab

(57) **Abstract**

A fixing element for fixing an elongated component to a device frame, the fixing element comprising a body part (2) extending in longitudinal direction, a first fixing member (21) and a second fixing member (22). Each one of the first fixing member (21) and the second fixing member (22) is a resilient member adapted to be received in a corresponding fixing recess (61, 62) provided in a device frame (6) for fixing the fixing element to the device frame (6). The fixing element comprises a first tool cavity (31) and a second tool cavity (32), each of the tool cavities (31, 32) extending towards a free end (23) of corresponding fixing member (21, 22) beyond a narrowing portion (25) provided in the fixing member (21, 22). Each tool cavity (31, 32) is adapted to receive a corresponding installation protrusion (821, 822) of an installation tool (8).

## Description

### FIELD OF THE INVENTION

The present invention relates to a fixing element for fixing an elongated component to a device frame. The invention also relates to a method of fixing an elongated component to a device frame using a fixing element. The method of fixing requires an installation assembly comprising a fixing element and a compatible installation tool. An end product of the method of fixing is a device assembly comprising an elongated component fixed to a device frame with a fixing element.

### BACKGROUND OF THE INVENTION

In a known method an elongated component is fixed to a device frame by an adhesive tape. In an alternative known method the adhesive tape is replaced with fastening paste.

One of the disadvantages associated with above fixing methods is that an adhesive tape may come loose and a fastening provided by fastening paste may break.

### BRIEF DESCRIPTION OF THE INVENTION

An object of the present invention is to provide a fixing method and a fixing element for the method so as to alleviate the above disadvantages. The objects of the invention are achieved by a fixing element characterized by what is stated in the independent claim 1, and a fixing method characterized by what is stated in the independent method claim. The preferred embodiments of the invention are disclosed in the dependent claims.

The invention is based on the idea of using a fixing element with resilient fixing members adapted to be received in fixing recesses provided in a device frame.

An advantage of the fixing method and fixing element of the invention is that they enable reliable fastening of an elongated component to a device frame. Further, the method of the invention provides a quick way of fixing an elongated component to a device frame.

### BRIEF DESCRIPTION OF THE DRAWINGS

In the following the invention will be described in greater detail by means of preferred embodiments with reference to the attached drawings, in which
Figure 1 shows a fixing element according to an embodiment of the invention;
Figure 2 shows a fixing element according to second embodiment of the invention;
Figure 3 shows a fixing element according to third embodiment of the invention;
Figure 4 shows a cross section of an installation assembly comprising the fixing element of Figure 1 and compatible installation tool;
Figure 5 illustrates a method of fixing an elongated component to a device frame using the installation assembly of Figure 4; and
Figure 6 shows a cross section of a device assembly manufactured by the method illustrated in Figure 5.

### DETAILED DESCRIPTION OF THE INVENTION

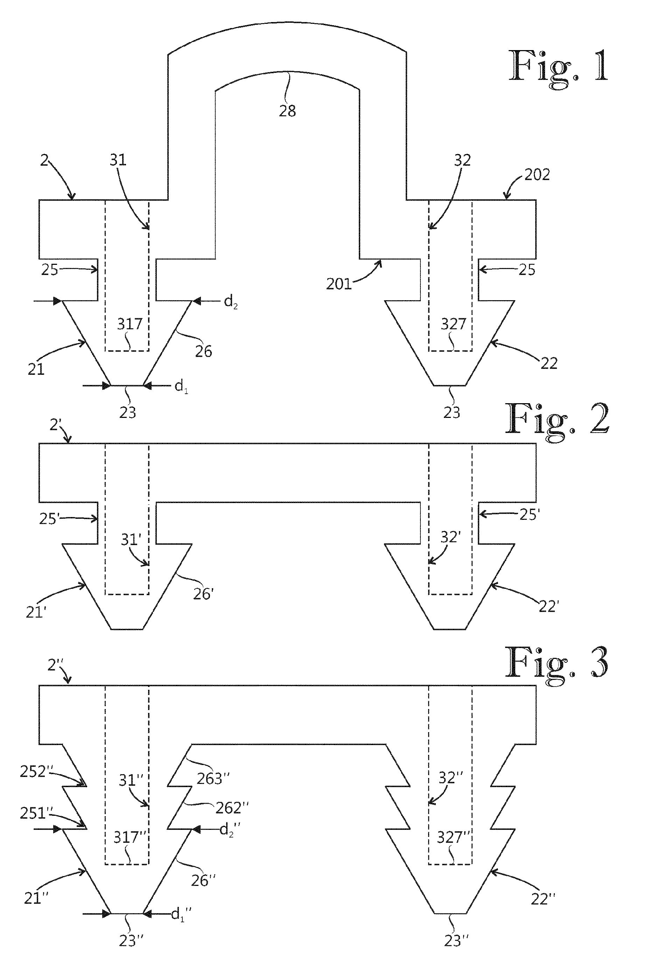

Figure 1 shows a fixing element for fixing an elongated component to a device frame. The fixing element comprises a body part 2 extending in longitudinal direction, a first fixing member 21 projecting from a first side 201 of the body part 2, and a second fixing member 22 projecting from the first side 201 of the body part 2. The second fixing member 22 extends substantially parallel to the first fixing member 21. The first fixing member 21 and the second fixing member 22 are spaced apart from each other in the longitudinal direction for receiving a portion of an elongated component between them.

In Figure 1 the longitudinal direction is horizontal direction. The first fixing member 21 and the second fixing member 22 extend perpendicular to the longitudinal direction.

Each one of the first fixing member 21 and the second fixing member 22 is a resilient member adapted to be received in a corresponding fixing recess provided in a device frame for fixing the fixing element to the device frame. In an embodiment the entire fixing element is made of same resilient material such as rubber.

Each one of the first fixing member 21 and the second fixing member 22 comprises a narrowing portion 25 located between a free end 23 of the fixing member and the body part 2. Diameter of the narrowing portion 25 is smaller than the maximum diameter of the fixing member between the free end 23 of the fixing member and the narrowing portion 25.

The fixing element comprises a first tool cavity 31 and a second tool cavity 32. Each one of the first tool cavity 31 and the second tool cavity 32 is accessible from a second side 202 of the body part 2 and extends towards the free end 23 of corresponding fixing member beyond the narrowing portion 25. The first tool cavity 31 extends inside the first fixing member 21, and the second tool cavity 32 extends inside the second fixing member 22. The first tool cavity 31 extends parallel to the second tool cavity 32. Each tool cavity is adapted to receive a corresponding installation protrusion of an installation tool.

The first tool cavity 31 has a bottom surface 317, and the second tool cavity 32 has a bottom surface 327. The bottom surface of each tool cavity is located at a distance from the free end 23 of the fixing member such that the tool cavity is adapted to co-operate with an installation protrusion of an installation tool for pushing the fixing element against a device frame. If material thickness at a bottom of a tool cavity is too thin, the bottom may break during use.

The second side 202 of the body part 2 faces an opposite direction compared with the first side 201 of the body part 2. In Figure 1 the first side 201 of the body part 2 faces downwards and the second side 202 of the body part 2 faces upwards.

Each one of the first fixing member 21 and the second fixing member 22 comprises a tapered fixing portion 26 which has a first diameter d₁ adjacent the free end 23 of the fixing member, and a second diameter d₂ further from the free end 23 in axial direction. The first diameter d₁ is smaller than the second diameter d₂. The first diameter d₁ is smaller than the diameter of the narrowing portion 25. The second diameter d₂ is greater than the diameter of the narrowing portion 25.

The body part 2 comprises a curvilinear portion 28. The fixing element is adapted to receive an elongated component between the curvilinear portion 28 and a plane defined by the first side 201 of the body part 2. The fixing element of Figure 1 does not require a groove for the elongated component in a device frame.

Figure 2 shows a fixing element according to second embodiment of the invention. The fixing element of Figure 2 is identical with the fixing element of Figure 1 except for the body part 2' which extends linearly. The fixing element of Figure 2 requires a groove for the elongated component in a device frame.

Figure 3 shows a fixing element according to third embodiment of the invention. The body 2" of the fixing element of Figure 3 is identical with the body 2' of the fixing element of Figure 2 while a first fixing member 21" and a second fixing member 22" are different from the fixing members of Figure 2.

Each one of the first fixing member 21" and the second fixing member 22" comprises a first tapered fixing portion 26" which has a first diameter d₁" adjacent a free end 23" of the fixing member, and a second diameter d₂" further from the free end 23". The first diameter d1" is smaller than the second diameter d₂". Each one of the first fixing member 21" and the second fixing member 22" further comprises a second tapered fixing portion 262" and a third tapered fixing portion 263". The third tapered fixing portion 263" is located adjacent the body 2" of the fixing element. The second tapered fixing portion 262" is located between the first tapered fixing portion 26" and the third tapered fixing portion 263". There is a first narrowing portion 251" located between the first tapered fixing portion 26" and the second tapered fixing portion 262", and a second narrowing portion 252" located between the second tapered fixing portion 262" and the third tapered fixing portion 263". Diameter of each narrowing portion is smaller than the maximum diameter of an adjacent tapered fixing portion.

Each of the fixing elements depicted in Figures 1, 2 and 3 is symmetrical with relation to a symmetry plane located between the first fixing member and the second fixing member. The longitudinal direction of the body part is perpendicular to the symmetry plane.

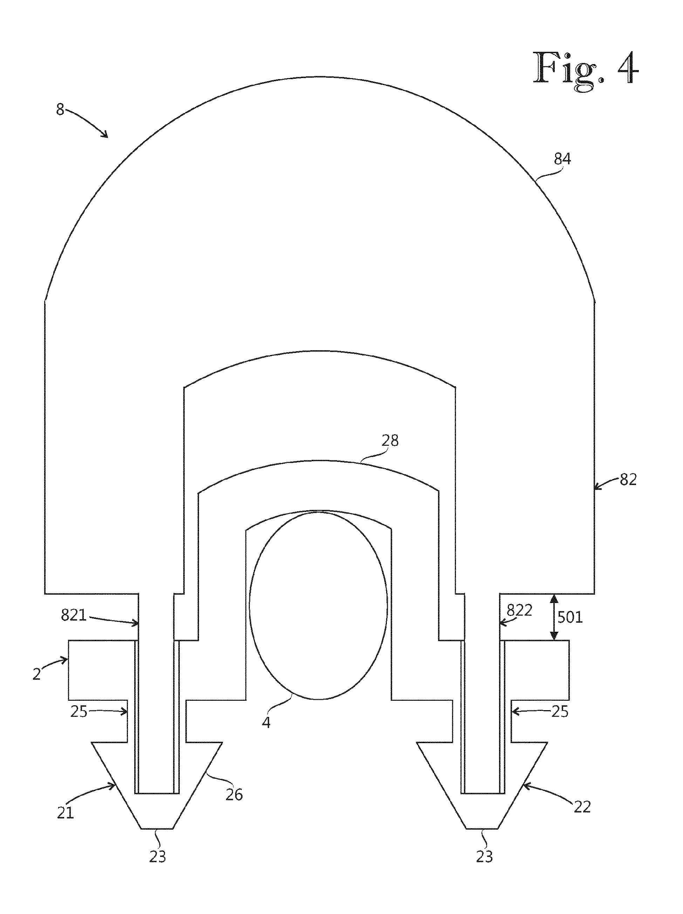

Figure 4 shows an installation assembly comprising the fixing element of Figure 1, a compatible installation tool 8 and a portion of an elongated component 4 received in the curvilinear portion 28 of the body part 2. The installation tool 8 comprises a tool body 82, a first installation protrusion 821 and a second installation protrusion 822. The tool body 82 has a grip portion 84 adapted to enable a person to grip the installation tool 8 by hand in order to use the installation tool 8. In an alternative embodiment an installation tool is adapted to be used by a machine in which case a grip portion adapted for manual gripping is not necessary.

The first installation protrusion 821 and the second installation protrusion 822 each protrudes from the tool body 82, and is adapted to be received in a tool cavity of the fixing element. The installation protrusions 821 and 822 are dimensioned such that when the installation protrusions are fully received in the tool cavities 31 and 32 there is an axial gap 501 between the body part 2 of the fixing element and the tool body 82 as shown in Figure 4. An installation protrusion is fully received in a tool cavity when a distal end of the installation protrusion is in contact with a bottom surface of the tool cavity.

The tool cavities 31" and 32" of the fixing element of Figure 3 are deeper than the tool cavities 31 and 32 of the fixing element of Figure 1. The installation tool of Figure 4 is optimized for the fixing element of Figure 1. An installation tool for the fixing element of Figure 3 would have slightly longer installation protrusions.

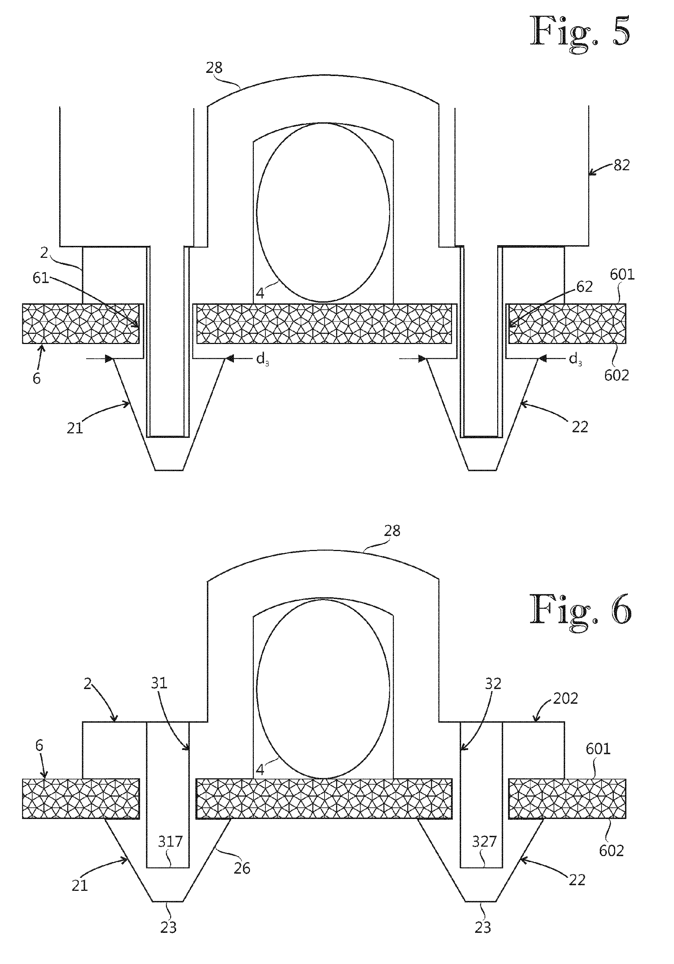

Figure 5 illustrates a method of fixing an elongated component 4 to a device frame 6 having a first fixing recess 61 and a second fixing recess 62 using the installation assembly of Figure 4. The device frame 6 may be manufactured from plastic or other suitable material. Diameter of the first fixing recess 61 is equal to the diameter of the second fixing recess 62. The second diameter d₂ of the tapered fixing portion 26 is greater than the diameter of the first fixing recess 61 or the diameter of the second fixing recess 62.

The fixing method comprises placing a portion of the elongated component 4 between the first fixing recess 61 and the second fixing recess 62 of the device frame 6 such that the first fixing recess 61 and the second fixing recess 62 remain accessible. After that the method comprises pushing the fixing element against the device frame 6 with the installation tool 8 such that the first fixing member 21 enters the first fixing recess 61 and the second fixing member 22 enters the second fixing recess 62 while the portion of the elongated component 4 is between the fixing element and the device frame 6. Said pushing is continued beyond a point where the installation protrusions 821 are 822 are fully received in the tool cavities 31 and 32 such that each of the fixing members is stretched axially and the maximum diameter thereof is reduced. In Figure 5 the maximum diameter of each fixing member is d₃ which is less than the maximum diameter d₂ of each fixing member in Figure 1. The diameter of each fixing member is reduced due to stretching of the fixing member. The reduced diameter facilitates entering of the fixing member into the fixing recess.

Stretching of a fixing member is based on co-operation between an installation protrusion and a bottom surface of a tool cavity. The first installation protrusion 821 co-operates with the bottom surface 317 of the first tool cavity 31 thereby stretching the first fixing member 21. The second installation protrusion 822 co-operates with the bottom surface 327 of the second tool cavity 32 thereby stretching the second fixing member 22. The device frame 6 provides a counterforce preventing movement of the body part 2 of the fixing element.

It should be noted that it is not necessary to stretch a fixing member such that the maximum diameter of the fixing member shrinks to match the diameter of a fixing recess. Since each fixing member is a resilient member, a diameter of a fixing member automatically decreases when pushed through a fixing recess.

The tool body 82 is adapted to act as a limiter which limits the stretching of each fixing member. In Figure 5 the tool body 82 is in contact with the body part 2 of the fixing element such that there is no axial gap between the body part 2 of the fixing element and the tool body 82. Therefore Figure 5 shows the maximum stretch of the fixing members 21 and 22 achievable by the installation tool 8, naturally excluding elasticity of the body part 2 of the fixing element. In the situation of Figure 5 a user of the installation tool 8 may exert a pressing force to the body part 2 of the fixing element through the tool body 82.

Figure 6 shows a device assembly manufactured by the above described method. The device assembly comprises the elongated component 4 fixed to the device frame 6 by means of the fixing element. The tapered fixing portion 26 of each fixing member is located on the other side of the device frame 6 compared with the body part 2 of the fixing element. The installation protrusions no longer stretch the fixing members 21 and 22, so the fixing members have substantially returned to their original form shown in Figure 1.

The device frame 6 is a planar component which has a first side 601 and a second side 602. The second side 602 faces opposite direction relative to the first side 601. Each one of the first fixing recess 61 and the second fixing recess 62 is a through-hole provided in the device frame 6 and extending from the first side 601 to the second side 602.

An axial dimension of each narrowing portion 25 substantially corresponds to an axial dimension of each through-hole, or thickness of the device frame 6. This design allows the tapered fixing portion 26 to expand on the second side 602 of the device frame 6. Expanded tapered fixing portions 26 provide reliable fastening. Further, since the fixing element effectively blocks the first fixing recess 61 and the second fixing recess 62, the fixing of the elongated component 4 to the device frame 6 does not impair ingress protection class of the device in question. The device assembly of Figure 6 fulfils requirements of ingress protection class IP 55. It is clear that unblocked through-holes would be detrimental to ingress protection class since solid objects and liquids could pass from one side of the device frame to the other side of the device frame through the unblocked through-holes.

In alternative embodiments the first fixing recess and the second fixing recess may be closed holes. In an embodiment the first fixing recess and the second fixing recess are closed holes having cylindrical form. In connection with cylindrical closed holes, the fixing members cannot expand on the other side of the device frame, and therefore the fixing members should be adapted to grip strongly to the inside walls of the closed holes. One way to strengthen the grip in closed holes is to use fixing members with a plurality of tapered fixing portions. Figure 3 shows an example of such a fixing element.

Gripping properties of a closed hole may be improved by providing a bottom of the closed hole with an expansion portion having an increased diameter. An expansion portion of a closed hole allows an end of a fixing member to expand thereby providing more reliable fastening.

A fixing element according to present invention may be used for fixing a cable or a flexible tube of a cooling system, or some other elongated component. A device frame having a first fixing recess and a second fixing recess may be part of a frequency converter, a computer or a vehicle, for example.

It will be obvious to a person skilled in the art that the inventive concept can be implemented in various ways. The invention and its embodiments are not limited to the examples described above but may vary within the scope of the claims.

## Claims

1. A fixing element for fixing an elongated component to a device frame, the fixing element comprising:
a body part (2) extending in longitudinal direction;
a first fixing member (21) projecting from a first side (201) of the body part (2);
a second fixing member (22) projecting from the first side (201) of the body part (2), the second fixing member (22) extending substantially parallel to the first fixing member (21),
the first fixing member (21) and the second fixing member (22) being spaced apart from each other in the longitudinal direction for receiving a portion of an elongated component (4) between them,
**characterized in that** each one of the first fixing member (21) and the second fixing member (22) is a resilient member adapted to be received in a corresponding fixing recess (61, 62) provided in a device frame (6) for fixing the fixing element to the device frame (6),
each one of the first fixing member (21) and the second fixing member (22) comprises a narrowing portion (25) located between a free end (23) of the fixing member (21, 22) and the body part (2), wherein diameter of the narrowing portion (25) is smaller than maximum diameter of the fixing member (21, 22) between the free end (23) of the fixing member (21, 22) and the narrowing portion (25), and
the fixing element comprises a first tool cavity (31) and a second tool cavity (32), each one of the first tool cavity (31) and the second tool cavity (32) is accessible from a second side (202) of the body part (2) and extends towards the free end (23) of corresponding fixing member (21, 22) beyond the narrowing portion (25), each tool cavity (31, 32) being adapted to receive a corresponding installation protrusion (821, 822) of an installation tool (8).

2. A fixing element according to claim 1, **characterized in that** each one of the first fixing member (21) and the second fixing member (22) comprises a tapered fixing portion (26) which has a first diameter (d₁) adjacent a free end (23) of the fixing member (21, 22) and a second diameter (d₂) further from the free end (23), wherein the first diameter (d₁) is smaller than the second diameter (d₂).

3. A fixing element according to claim 1 or 2, **characterized in that** the fixing element is symmetrical with relation to a symmetry plane located between the first fixing member (21) and the second fixing member (22), wherein the longitudinal direction is perpendicular to the symmetry plane.

4. A fixing element according to any one of claims 1 to 3, **characterized in that** the entire fixing element is made of same resilient material.

5. An installation assembly comprising an installation tool and a fixing element according to any one of claims 1 to 4, the installation tool (8) comprising:
a tool body (82); and
a first installation protrusion (821) and a second installation protrusion (822) each protruding from the tool body (82) and adapted to be received in a tool cavity (31, 32) of the fixing element, the installation protrusions (821, 822) being dimensioned such that when the installation protrusions (821, 822) are fully received in the tool cavities (31, 32) there is an axial gap (501) between the body part (2) of the fixing element and the tool body (82).

6. A device assembly comprising:
a device frame (6) having a first fixing recess (61) and a second fixing recess (62);
a fixing element for fixing an elongated component (4) to the device frame (6);
an elongated component (4) fixed to the device frame (6) by means of the fixing element,
**characterized in that** the fixing element is a fixing element according to any one of claims 1 to 4 such that the first fixing member (21) is at least partially received in the first fixing recess (61), and the second fixing member (22) is at least partially received in the second fixing recess (62).

7. A device assembly according to claim 6, **characterized in that** each one of the first fixing recess (61) and the second fixing recess (62) is a through-hole provided in the device frame (6), wherein the axial dimension of the narrowing portion (25) corresponds to the axial dimension of the through-hole.

8. Method of fixing an elongated component to a device frame, the method comprising providing a device frame (6) with a first fixing recess (61) and a second fixing recess (62), and providing an elongated component (4) such as a cable or a tube, **characterized in that** the method comprises:
providing an installation assembly according to claim 5,
pushing the fixing element against the device frame (6) with the installation tool (8) such that the first fixing member (21) enters the first fixing recess (61) and the second fixing member (22) enters the second fixing recess (62) while a portion of the elongated component (4) is between the fixing element and the device frame (6), wherein said pushing is continued beyond a point where the installation protrusions (821, 822) are fully received in the tool cavities (31, 32) such that each of the fixing members (21, 22) is stretched axially and the maximum diameter thereof is reduced thereby facilitating entering of the fixing members (21, 22) into the fixing recesses (61, 62).
